# EUROPÄISCHE PATENTSCHRIFT

(11) **EP 2 492 045 B1**
(45) Veröffentlichungstag und Bekanntmachung des Hinweises auf die Patenterteilung: **31.12.2014**
(21) Anmeldenummer: 12156653.3
(22) Anmeldetag: 23.02.2012
(51) Int. Cl.: B23Q 1/01, B23Q 7/03, B65G 17/30

(54) **Fördervorrichtung**
Conveying device
Dispositif d'acheminement

(30) Priorität: 28.02.2011 DE 102011004820
(43) Veröffentlichungstag der Anmeldung: 29.08.2012
(73) Patentinhaber: Homag Holzbearbeitungssysteme GmbH, 72296 Schopfloch (DE)
(72) Erfinder: Gringel, Martin, 72479 Straßberg (DE); Fetscher, Joachim, 77296 Schopfloch (DE)
(74) Vertreter: Hoffmann Eitle

(56) Entgegenhaltungen:
- EP-A1- 0 253 930
- EP-A2- 0 194 173
- EP-A2- 1 593 617
- EP-A2- 2 100 694
- WO-A2-2011/007302
- CH-A5- 634 243
- DE-A1- 2 521 036
- DE-A1- 2 800 728

## Beschreibung

### Technisches Gebiet

Die Erfindung betrifft eine Vorrichtung zum Fördern in einer Förderrichtung und bevorzugt auch zum Bearbeiten von Werkstücken, mit mindestens einem Endlosumlaufelement, auf welches die Werkstücke direkt oder indirekt aufgenommen werden können, um diese in der Förderrichtung zu fördern, und einer Tragkonstruktion, die eingerichtet ist, Stütz- oder Reaktionskräfte des mindestens einen Fördermittels abzutragen, d.h. aufzunehmen und weiterzuleiten.

### Stand der Technik

Fördervorrichtungen der eingangs genannten Art kommen beispielsweise bei der Bearbeitung und Handhabung von Werkstücken verbreitet zum Einsatz. Dabei können die Fördervorrichtungen einerseits dazu dienen, Werkstücke im Sinne eines reinen Transports lediglich in einer Förderrichtung zu bewegen, um diese beispielsweise von einer ersten Bearbeitungsmaschine zu einer zweiten Bearbeitungsmaschine oder innerhalb einer Lagerstätte zu bewegen. Andererseits können gattungsgemäße Fördervorrichtungen auch Teil einer Bearbeitungsvorrichtung sein und innerhalb dieser Bearbeitungsvorrichtung dazu dienen, die Werkstücke an Bearbeitungsmitteln (wie beispielsweise spanabhebenden Werkzeugen) entlang zu führen und gegebenenfalls zu fixieren.

In jedem Falle treten bei solchen Fördervorrichtungen hohe dynamische Kräfte auf, zumal die in der Industrie geforderten Fördergeschwindigkeiten immer weiter zunehmen. Es ist daher wichtig, dass die Fördervorrichtungen hohen dynamischen Beanspruchungen gewachsen sind bzw. möglichst schwingungsarm sind. Vor diesem Hintergrund ist es üblich, die Tragkonstruktionen von Fördereinrichtungen aus Stahl herzustellen, da dieser Werkstoff ein hohes Eigengewicht besitzt und darüber hinaus hohe dynamische Lasten ertragen kann.

Allerdings hat sich gezeigt, dass das Schwingungs- und Schwingungsdämpfungsverhalten von Tragkonstruktionen aus Stahl oder anderen Metallen oft nicht zufriedenstellend ist. Darüber hinaus besitzen Stahlkonstruktionen den Nachteil eines extrem hohen Gewichts, was Transport und Montage derartiger Fördervorrichtungen erschwert. Nicht zuletzt erfordert die Produktion von Tragkonstruktionen aus Stahl einen hohen Energieeinsatz, was aus Umweltgesichtspunkten unerwünscht ist.

Ferner ist die EP 2 100 694 A2 bekannt, die eine Bearbeitungsmaschine zum Bearbeiten von Werkstücken betrifft, mit mindestens einem tragenden Maschinenteil und mindestens einer mit dem tragenden Maschinenteil verbundenen Bearbeitungseinheit, wobei das tragende Maschinenteil zumindest abschnittsweise aus Beton besteht, und der Beton des tragenden Maschinenteils durch einen Beton gebildet wird, der einen Wasser-Bindemittelwert von höchsten 0,30 und/oder eine Biegezugfestigkeit von mindestens 15 MPa aufweist. Sie offenbart ebenfalls eine Vorrichtung nach dem Oberbegriff des Anspruchs 1. Ferner ist die DE 2 521 036 A1 bekannt, die ein eigensteifes Werkzeugmaschinenbett aus Beton oder dergleichen betrifft, mit eingelassenen Aufnahmen zur beweglichen und/oder festen Lagerung von Maschinenteilen.

Die EP 0 194 173 A2 betrifft ein Maschinenbett, an dem eine Traverse angebracht ist, entlang der ein Werkzeughalter bewegt werden kann.

Ferner ist die WO 2011/007302 A2 zu nennen.

### Darstellung der Erfindung

Es ist daher Aufgabe der vorliegenden Erfindung, eine Fördervorrichtung der eingangs genannten Art bereitzustellen, die bei vergleichsweise geringem Gewicht und günstiger Energiebilanz ein gutes Dämpfungsverhalten aufweist.

Diese Aufgabe wird erfindungsgemäß durch eine Vorrichtung nach Anspruch 1 gelöst. Besonders bevorzugte Weiterbildungen der Erfindung sind in den abhängigen Ansprüchen angegeben.

Der Erfindung liegt der Gedanke zugrunde, die Tragkonstruktion, die dazu dient, Stütz- oder Reaktionskräfte eines Fördermittels abzutragen, aus einem völlig andersartigen Werkstoff als bisher herzustellen. Zu diesem Zweck ist erfindungsgemäß vorgesehen, dass die Tragkonstruktion einen balkenförmigen Träger aus zementgebundenem Beton aufweist, der als unmittelbare Führung des Endlosumlaufelements dient.

Durch den Einsatz eines solchen Hochleistungsbetons ist es möglich, das Schwingungs- bzw. Schwingungsdämpfungsverhalten der Tragkonstruktion drastisch zu verbessern. Der Grund hierfür ist primär darin zu sehen, dass durch die innere Kornstruktur des Betons eine hohe Energieabsorption stattfindet, die dafür sorgt, dass auf die Tragkonstruktion aufgebrachte Schwingungen vergleichsweise schnell abklingen. Hierdurch können mit der erfindungsgemäßen Fördervorrichtung nicht nur höhere Fördergeschwindigkeiten, sondern auch schwingungsärmere Fördervorgänge erreicht werden. Diese schwingungsärmeren Fördervorgänge sind nicht nur schonender für die Fördervorrichtung selbst und die geförderten Werkstücke, sondern ermöglichen mit der erfindungsgemäßen Fördervorrichtung ausgerüsteten Bearbeitungsmaschinen auch eine Erhöhung der Bearbeitungsgenauigkeit.

Dabei können die genannten Vorteile je nach Ausgestaltung der Fördervorrichtung in manchen Fällen sogar bei vermindertem Eigengewicht der Tragkonstruktion, und praktisch immer bei vermindertem Energieeinsatz verwirklicht werden.

Der Beton kann im Rahmen der vorliegenden Erfindung auf unterschiedlichste Art und Weise ausgestaltet sein und beispielsweise auch in Form schlaff bewehrter und/oder vorgespannter Elemente (insbesondere mit sofortigem Verbund) gebildet sein. Besonders bevorzugt ist dabei der Einsatz von Faserbeton, wobei in diesem Falle vorteilhaft zumindest auf schlaffe Bewehrungselemente und gegebenenfalls auch auf vorgespannte Bewehrungselemente verzichtet werden kann. Als eigentliches Betonmaterial hat sich sogenannter UHPC (Ultra High Performance Concrete) bewährt, der beispielsweise eine Druckfestigkeit von mindestens 150 MPa aufweisen kann.

Gemäß einer Weiterbildung der Erfindung ist vorgesehen, dass mindestens ein Endlosumlaufelement eine Kette, einen Riemen oder ein Band aufweist. In Kombination mit der erfindungsgemäßen Ausgestaltung der Tragkonstruktion aus zementgebundenem Beton ergibt sich hieraus ein besonders schwingungsarmer Betrieb der erfindungsgemäßen Fördervorrichtung bei einfacher Konstruktion.

Alternativ oder zusätzlich ist gemäß einer Weiterbildung der Erfindung vorgesehen, dass mindestens ein Fördermittel einen verfahrbaren Schlitten aufweist. Hierdurch lässt sich der Einsatzbereich der erfindungsgemäßen Fördervorrichtung deutlich verbreitern, da praktisch alle Arten von Werkstücken gefördert werden können. Dabei kann der Schlitten auf unterschiedlichste Art und Weise ausgestaltet sein und beispielsweise Greifer, Spannmittel oder dergleichen aufweisen und gegebenenfalls auch kranartig ausgestaltet sein.

Gemäß einer Weiterbildung der Erfindung ist ferner vorgesehen, dass die Tragkonstruktion mindestens einen Führungsabschnitt zum Führen mindestens eines Fördermittels in der Förderrichtung aufweist, wobei der Führungsabschnitt bevorzugt zumindest abschnittsweise aus einem anderen Material als zementgebundenem Beton besteht. Durch diese Kombination lässt sich das vorteilhafte Schwingungsdämpfungsverhalten der erfindungsgemäßen Tragkonstruktion mit einer präzisen Führung des jeweiligen Fördermittels kombinieren, ohne dass aufwändige Nachbearbeitungen der Tragkonstruktion erforderlich sind. Dabei kann der Führungsabschnitt beispielsweise aus Stahl, Aluminium oder einem anderen geeigneten Metall oder sonstigem Material bestehen.

Die Tragkonstruktion kann in geometrischer Hinsicht auf unterschiedlichste Art und Weise ausgestaltet sein. Dabei ist es besonders bevorzugt, dass die Tragkonstruktion einen balkenförmigen Träger aus zementgebundenem Beton, insbesondere Spannbeton aufweist. Durch den Einsatz von Spannbeton lassen sich auch die Dauerhaftigkeit und Maßhaltigkeit deutlich steigern, was sich in einer langfristig hohen Bearbeitungspräzision der erfindungsgemäßen Bearbeitungsvorrichtung niederschlägt. Dies gilt insbesondere, wenn zumindest teilweise Spannelemente mit sofortigem Verbund zum Einsatz kommen.

Ferner ist es bevorzugt, dass der balkenförmige Träger zumindest abschnittsweise einen von einem Rechteck abweichenden und/oder hohlen Querschnitt aufweist, der ggf. rund oder polygonal ausgestaltet sein kann. Durch diese Querschnittsgestaltung lässt sich das Schwingungsdämpfungsverhalten der Tragkonstruktion weiter verbessern und gleichzeitig das Eigengewicht optimieren.

Obgleich die erfindungsgemäße Fördervorrichtung ohne zusätzliche Bauteile lediglich zum Fördern von Werkstücken dienen kann, ist gemäß einer Weiterbildung der Erfindung vorgesehen, dass die Vorrichtung ferner mindestens eine Bearbeitungseinrichtung aufweist. Auf diese weise lassen sich die hervorragenden Eigenschaften der erfindungsgemäßen Fördervorrichtung, insbesondere der zügige und schwingungsarme Fördervorgang, nutzen, um bei hohem Durchsatz hervorragende Bearbeitungsergebnisse zu erzielen.

### Kurze Beschreibung der Zeichnungen

- Fig. 1: zeigt schematisch eine Bearbeitungsvorrichtung als bevorzugte Ausführungsform der vorliegenden Erfindung;
- Fig. 2: zeigt schematisch ein Beispiel einer Vorrichtung;
- Fig. 3: zeigt schematisch eine Teilansicht eines Fördermittels;
- Fig. 4: zeigt schematisch eine Fördervorrichtung als bevorzugte Ausführungsform der vorliegenden Erfindung.

### Ausführliche Beschreibung bevorzugter Ausführungsformen

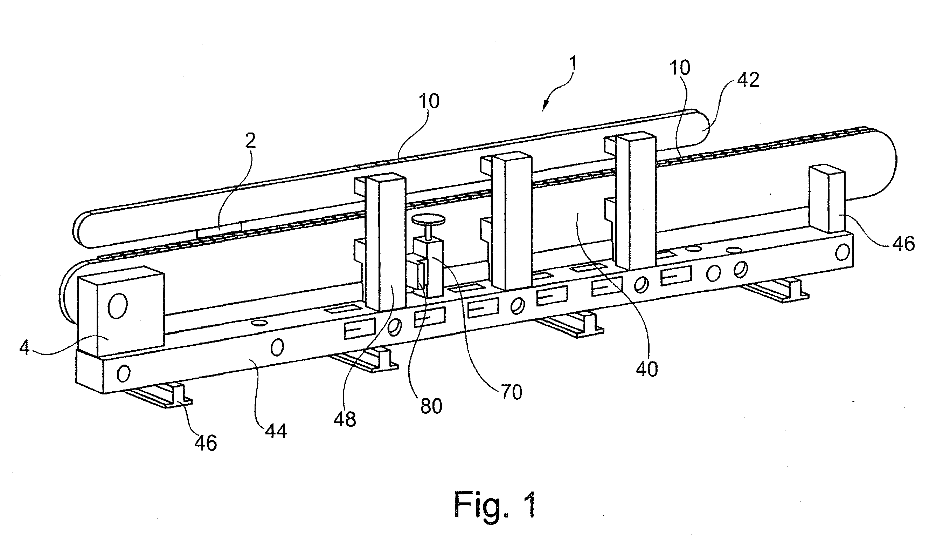

Bevorzugte Ausführungsformen der vorliegenden Erfindung werden nachfolgend ausführlich unter Bezugnahme auf die begleitenden Zeichnungen beschrieben. Eine Vorrichtung 1 zum Fördern von Werkstücken 2 in einer Förderrichtung und zum gleichzeitigen Bearbeiten von Werkstücken 2 ist in Fig. 1 schematisch in einer Perspektivansicht dargestellt. Dabei ist zu beachten, dass die in Fig. 1 gezeigte Vorrichtung 1 ausschließlich als reine Fördereinrichtung, aber auch als kombinierte Förder- und Bearbeitungsvorrichtung ausgestaltet sein kann. Dabei dient die Vorrichtung 1 - ebenso wie die übrigen nachfolgend beschriebenen Vorrichtungen - bevorzugt zum Fördern und gegebenenfalls Bearbeiten von Werkstücken, die zumindest abschnittsweise aus Holz, Holzwerkstoffen, Kunststoff oder dergleichen bestehen, wie sie beispielsweise im Bereich der Möbel- und Bauelementeindustrie verbreitet zum Einsatz kommen.

Die in Fig. 1 gezeigte Vorrichtung 1 umfasst zunächst ein Fördermittel 10, das in der vorliegenden Ausführungsform als Endlosumlaufelement in Form einer sogenannten Magnetkette ausgebildet ist. Dabei ist zu beachten, dass das Endlosumlaufelement 10 in Fig. 1 nur teilweise gezeigt ist.

Alternativ sind selbstverständlich auch andere Endlosumlaufelemente möglich, wie beispielsweise einfache Ketten, Riemen, Bänder oder dergleichen. Das durch das Endlosumlaufelement gebildete Fördermittel 10 dient dazu, die Werkstücke 2 aufzunehmen und in einer Förderrichtung (von links nach rechts in Fig. 1) zu fördern.

Ferner umfasst die Vorrichtung 1 eine Tragkonstruktion 40, 42, 44, 46, die eingerichtet ist, die Stütz- und Reaktionskräfte des Fördermittels 10 abzutragen. Zu diesem Zweck umfasst die Tragkonstruktion zunächst einen balkenförmigen Träger 40, der als unmittelbare Führung für die Magnetkette 10 ausgebildet sein kann. Dieser stützt sich über eine Abstützung 46 auf einem balkenförmigen Grundträger 44 ab, der wiederum auf Maschinenfüßen 46 gelagert ist.

Ferner umfasst die Vorrichtung 1 in der vorliegenden Ausführungsform einen sogenannten Oberdruck, der ebenfalls ein Endlosumlaufelement 10 aufweist, der durch eine Tragkonstruktion 42, wiederum in Form eines balkenförmigen Trägers, gestützt wird. Über Ständer 48 ist der Träger 42 mit dem Grundträger 44 verbunden.

In der vorliegenden Ausführungsform bestehen alle Bauteile der Tragkonstruktion 40, 42, 44, 46 und 48 zumindest abschnittsweise aus zementgebundenem Beton, wobei auch nur einige Teil der Tragkonstruktion ganz oder teilweise aus Zement gebundenem Beton hergestellt werden können.

Der erfindungsgemäße Beton zeichnet sich dadurch aus, dass er einen niedrigen Wasser-Bindemittelwert von höchstens 0,30 und eine hohe Biegezugfestigkeit von mindestens 15 MPa aufweist. Dabei ist der Wasser-Bindemittelwert definiert als das Verhältnis zwischen der Masse des wirksamen Wassergehaltes (kg) und der Masse des anrechenbaren Bindemittelgehaltes (kg). Die Biegezugfestigkeit kann im Rahmen eines Vierpunktbiegeversuchs an prismatischen Probekörpern ermittelt werden, beispielsweise mittels des in den Richtlinien des Deutschen Betonvereins definierten Vierpunktbiegeversuchs.

Konkret weist der Beton in der vorliegenden Ausführungsform einen Wasserbindemittelwert von ca. 0,18 und eine Biegezugfestigkeit von ca. 30 MPa auf. Ein weiterer, wesentlicher Materialparameter des Betons ist seine Druckfestigkeit, die in der vorliegenden Ausführungsform mindestens 150 MPa beträgt, wobei die Druckfestigkeit des Betons als Bemessungswert der Druckfestigkeit nach DIN 1045-1 definiert ist.

Zur Erreichung dieser Festigkeitswerte trägt bei, dass der Beton in der vorliegenden Ausführungsform Fasern enthält, wie beispielsweise Metallfasern, Kunststofffasern oder andere geeignete Fasern. Hierdurch erhöhen sich jedoch nicht nur die Festigkeitswerte des Betons, sondern der Beton wird auch weniger rissanfällig, besitzt ein verbessertes Schwindverhalten und eine erhöhte Dauerhaftigkeit. Ferner trägt das Vorsehen von Fasern im Beton dazu bei, die Notwendigkeit stabförmiger Bewehrungseinlagen wie gerippten Betonstahlstäben in den tragenden Maschinenteilen zu vermindern, so dass je nach Anwendungsfall und Betoneigenschaften in vielen Fällen vollständig auf derartige Bewehrungseinlagen verzichtet werden kann. In diesen Fällen kann jedoch ggf. konstruktive Bewehrung vorhanden sein, beispielsweise um die tragenden Maschinenteile beim Transport zu schützen oder lokale Lasteinleitungsstellen vorzusehen.

Die Herstellung und Verarbeitung des hier zur Rede stehenden Betons, insbesondere des Faserbetons, ist im Stand der Technik und somit dem Fachmann prinzipiell bekannt und entspricht prinzipiell der Vorgehensweise, wie sie im Bereich der Bautechnik zum Einsatz kommt. So kann die Herstellung des Faserbetons beispielsweise nach der Richtlinie des Deutschen Ausschusses für Stahlbeton mit dem Titel "Stahlfaserbeton" (21. Entwurf vom April 2005) erfolgen. Ebenso kann hinsichtlich der Herstellung und Verarbeitung des Betons auf die Veröffentlichung der Association Français de Genie Civile mit dem Titel "Interim Recommendations on Ultra-High Performance Fiber-Reinforced Concrete" (2002) zurückgegriffen werden.

Die balkenförmigen Träger 40, 42 und 44 sind in der vorliegenden Ausführungsform aus Spannbeton hergestellt, wobei es sich bevorzugt um vorgespannten Faserbeton handelt, der besonders bevorzugt eine Mehrzahl von Spanngliedern mit sofortigem Verbund aufweist. Dies bedeutet, dass die Spannglieder keine Hüllrohre oder dergleichen aufweisen, sondern in direktem Verbund mit dem umgebenden Beton stehen.

Obgleich in Fig. 1 nicht ausdrücklich gezeigt, können einer oder mehrere balkenförmige Träger vorzugsweise einen von einem Querschnitt abweichenden und/oder hohlen Querschnitt aufweisen. Auf diese Weise lässt sich das Trag- und Schwingungsdämpfungsverhalten des jeweiligen Trägers weiter optimieren.

Ferner umfasst die in Fig. 1 gezeigte Vorrichtung eine Bearbeitungseinrichtung 70, die in der vorliegenden Ausführungsform als Fräseinheit ausgebildet ist. Diese ist in der vorliegenden Ausführungsform über einen Kreuzschlitten 80 mit dem Ständer 48 verbunden, wobei Teile der Bearbeitungseinrichtung 70 (z.B. ein Gehäuseabschnitt) oder der Kreuzschlitten 80 vorzugsweise ebenfalls aus dem oben beschriebenen zementgebundenen Beton bestehen kann.

Insgesamt ist die in Fig. 1 gezeigte Vorrichtung als Durchlaufmaschine ausgestaltet, bei welcher die Bearbeitungseinrichtung 70 in Förderrichtung stationär oder gegebenenfalls in Grenzen verfahrbar ist und die Werkstücke in der Förder- bzw. Durchlaufrichtung an den jeweiligen Bearbeitungseinrichtungen im Durchlauf vorbeigefördert werden.

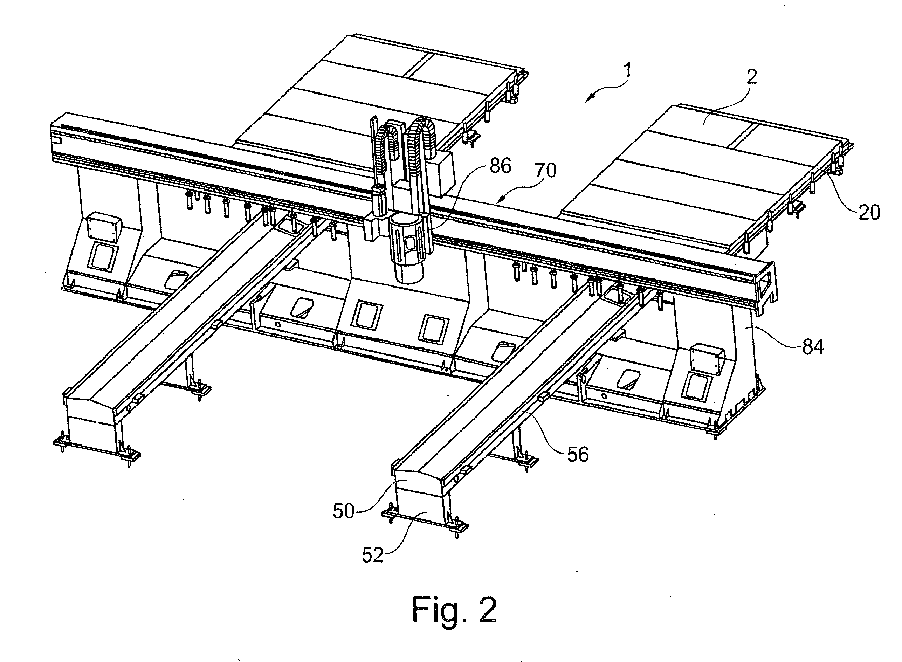

Ein Beispiel einer Vorrichtung ist in Fig. 2 schematisch in einer Perspektivansicht dargestellt. Die in Fig. 2 gezeigte Vorrichtung 2 umfasst zwei schlittenartige Bearbeitungstische 20, die entlang einer Tragkonstruktion 50, 52 verfahrbar sind. Zu diesem Zweck weist die Tragkonstruktion 50, 52 Führungsabschnitte 56 auf, die in dem vorliegenden Beispiel als Stahlschienen ausgebildet sind.

Die Tragkonstruktion 50, 52 besteht auch in der vorliegenden Ausführungsform zumindest abschnittsweise aus dem oben beschriebenen, Zement gebundenen Beton. Vorteilhaft sind jedoch auch weitere Bauteile der in Fig. 2 gezeigten Gesamtvorrichtung aus Zement gebundenem Beton herstellt, wie insbesondere das Portal 84 oder der Kreuzschlitten 86, mittels dessen eine Bearbeitungseinrichtung 70 verfahrbar geführt wird.

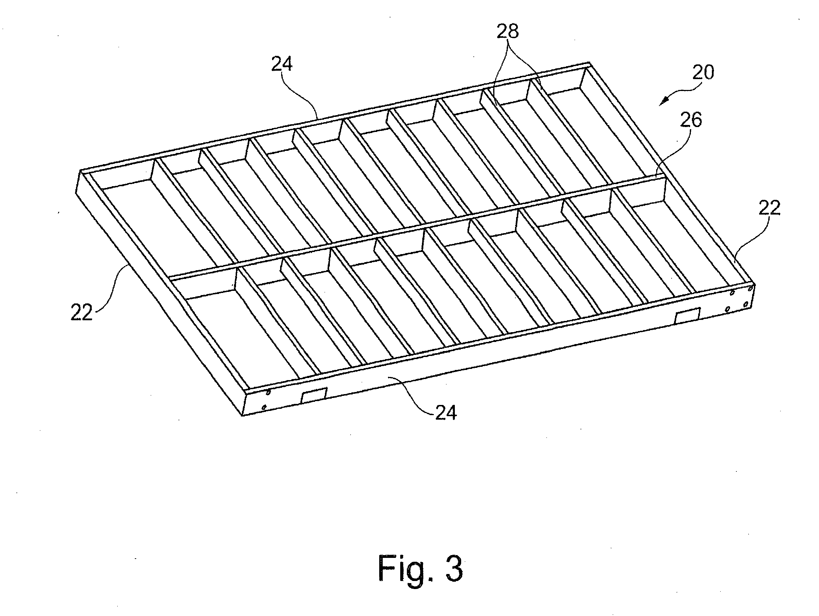

Der konstruktive Aufbau des als verfahrbarer Schlitten ausgestalteten Fördermittels 20 ist in Fig. 3 in einer teilweisen Perspektivansicht näher gezeigt. Es ist zu erkennen, dass der Schlitten bzw. Tisch 20 in dem vorliegenden Beispiel als modularer Rahmen aufgebaut ist, der eine Mehrzahl von Querstreben 22, Seitenwangen 24, Querrippen 28 sowie ein Mittelteil 26 aufweist. Diese Bauteile können vorteilhaft ebenfalls aus dem oben beschriebenen Zement gebundenen Beton hergestellt sein, obgleich auch Stahlkonstruktionen oder dergleichen möglich sind.

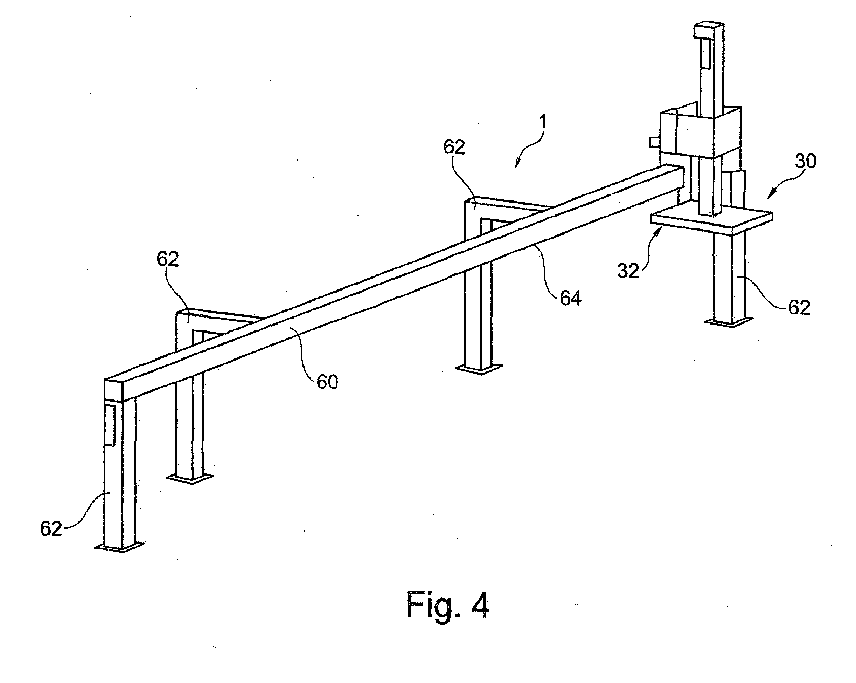

Eine weiteres Beispiel einer Vorrichtung ist in Fig. 4 schematisch dargestellt. Dieser zeichnet sich dazu aus, dass es sich um eine reine Fördereinrichtung 1 für Werkstücke (in Fig. 4 nicht gezeigt) handelt. Genauer gesagt weist die in Fig. 4 gezeigte Fördervorrichtung 1 einen verfahrbaren Schlitten 30 auf, der in dem vorliegenden Beispiel Greifmittel 32 aufweist, die beispielsweise durch einen oder eine Mehrzahl von Vakuumsaugern gebildet sein können. Der Schlitten 30 ist entlang einer Tragkonstruktion 60, 62 verfahrbar, die in dem vorliegenden Beispiel durch eine Mehrzahl balkenförmiger Träger aus dem oben beschriebenen Zement gebundenen Beton hergestellt ist. Dabei weist der balkenförmige Träger 60 in dem vorliegenden Beispiel einbetonierte Führungsabschnitte 64 auf. Dabei ist insbesondere der balkenförmige Träger 60, gegebenenfalls auch die Stützen 62, als Spannbetonträger ausgeführt.

## Patentansprüche

1. Vorrichtung (1) zum Fördern in einer Förderlaufrichtung und bevorzugt auch zum Bearbeiten von Werkstücken (2), mit:
mindestens einem Endlosumlaufelement (10), durch welches die Werkstücke direkt oder indirekt aufgenommen werden können, um diese in der Förderrichtung zu fördern, und
einer Tragkonstruktion (40 ...; 50 ...; 60 ...; 70; 80), die eingerichtet ist, Stütz- oder Reaktionskräfte des mindestens einen Endlosumlaufelements (10) abzutragen, wobei
die Tragkonstruktion (40 ...; 50 ...; 60 ...; 70; 80) zumindest abschnittsweise aus zementgebundenem Beton, insbesondere UHPC und/oder Faserbeton, mit einer Biegezugfestigkeit von mindestens 15 MPa besteht,
**dadurch gekennzeichnet, dass**
die Tragkonstruktion ferner einen balkenförmigen Träger (40) aus zementgebundenem Beton aufweist, der als unmittelbare Führung des Endlosumlaufelements dient.

2. Vorrichtung nach Anspruch 1, **dadurch gekennzeichnet, dass** das Endlosumlaufelement (10) eine Kette, insbesondere Magnetkette, einen Riemen oder ein Band aufweist.

3. Vorrichtung nach Anspruch 1 oder 2, **dadurch gekennzeichnet, dass** mindestens ein Endlosumlaufelement (20, 30) einen verfahrbaren Schlitten aufweist.

4. Vorrichtung nach einem der vorhergehenden Ansprüche, **dadurch gekennzeichnet, dass** der balkenförmige Träger (40, 42, 44; 50; 60, 62) aus Spannbeton, bevorzugt mit sofortigem Verbund, besteht.

5. Vorrichtung nach Anspruch 3, **dadurch gekennzeichnet, dass** der balkenförmige Träger (40, 42, 44; 50; 60, 62) zumindest abschnittsweise einen von einem Rechteck abweichenden und/oder hohlen Querschnitt aufweist.

6. Vorrichtung nach einem der vorhergehenden Ansprüche, **dadurch gekennzeichnet, dass** sie ferner mindesten eine Bearbeitungseinrichtung (70) aufweist.

7. Vorrichtung nach einem der Ansprüche 1 bis 4, **dadurch gekennzeichnet, dass** sie ausschließlich zum Fördern und/oder Handhaben von Werkstücken (2) dient.

8. Vorrichtung nach einem der vorhergehenden Ansprüche, **dadurch gekennzeichnet, dass** die Vorrichtung als Durchlaufmaschine ausgestaltet ist.

## Claims

1. Apparatus (1) for conveying in a direction of conveying and preferably also for processing workpieces (2), having:
at least one endlessly revolving element (10) by which the workpieces can be picked up directly or indirectly in order to convey them in the direction of conveying, and
a supporting structure (40 ...; 50 ...; 60 ...; 70; 80) which is designed to transfer supporting or reaction forces of the at least one endlessly revolving element (10),
wherein
the supporting structure (40 ...; 50 ...; 60 ...; 70; 80) in at least one section is made of cement-bound concrete, in particular UHPC and/or fibre-reinforced concrete, having a bending tensile strength of at least 15 MPa,
**characterised in that**
the supporting structure further has a beam-like support (40) made of cement-bound concrete, which serves as a direct guide for the endlessly revolving element.

2. Apparatus according to claim 1, **characterised in that** the endlessly revolving element (10) has a chain, in particular a magnetic chain, or a belt.

3. Apparatus according to claim 1 or 2, **characterised in that** at least one endlessly revolving element (20, 30) has a movable carriage.

4. Apparatus according to any of the preceding claims, **characterised in that** the beam-like support (40, 42, 44; 50; 60, 62) is made of prestressed concrete, preferably with pretensioning.

5. Apparatus according to claim 3, **characterised in that** the beam-like support (40, 42, 44; 50; 60, 62) in at least one section has a cross-section different to a rectangle and/or hollow cross-section.

6. Apparatus according to any of the preceding claims, **characterised in that** it further has at least one processing device (70).

7. Apparatus according to any of claims 1 to 4, **characterised in that** it serves exclusively to convey and/or handle workpieces (2).

8. Apparatus according to any of the preceding claims, **characterised in that** the apparatus is designed as a through-feed machine.

## Revendications

1. Dispositif (1) pour le transport dans une direction de convoyage et de préférence également pour l'usinage de pièces (2), comprenant :
au moins un élément de circulation sans fin (10), permettant une réception directe ou indirecte des pièces, pour transporter celles-ci dans la direction de convoyage, et
une construction porteuse (40 ... ; 50 ... ; 60 ... ; 70 ; 80), prévue pour supporter les efforts d'appui ou de réaction du ou des éléments de circulation sans fin (10),
la construction porteuse (40 ... ; 50 ... ; 60 ... ; 70 ; 80) étant constituée au moins partiellement de béton lié au ciment, en particulier de béton ultra-hautes performances et/ou de béton fibré, présentant une résistance à la traction par flexion minimale de 15 MPa,
**caractérisé en ce que**
la construction porteuse comporte en outre un support en forme de barre (40) en béton lié au ciment, lequel sert de guidage direct pour l'élément de circulation sans fin.

2. Dispositif selon la revendication 1, **caractérisé en ce que** l'élément de circulation sans fin (10) comporte une chaîne, en particulier une chaîne magnétique, une courroie ou un ruban.

3. Dispositif selon la revendication 1 ou 2, **caractérisé en ce qu'**au moins un élément de circulation sans fin (20, 30) comporte un chariot mobile.

4. Dispositif selon l'une des revendications précédentes, **caractérisé en ce que** le support en forme de barre (40, 42, 44 ; 50 ; 60, 62) est en béton précontraint, de préférence à prise instantanée.

5. Dispositif selon la revendication 3, **caractérisé en ce que** le support en forme de barre (40, 42, 44 ; 50 ; 60, 62) présente une section transversale au moins partiellement différente d'un rectangle et/ou une section transversale creuse.

6. Dispositif selon l'une des revendications précédentes, **caractérisé en ce que** celui-ci comprend au moins un équipement d'usinage (70).

7. Dispositif selon l'une des revendications 1 à 4, **caractérisé en ce que** celui-ci sert exclusivement au transport et/ou à la manipulation de pièces (2).

8. Dispositif selon l'une des revendications précédentes, **caractérisé en ce que** ledit dispositif est réalisé comme machine à fonctionnement continu.
